# EUROPÄISCHE PATENTSCHRIFT

(11) **EP 2 163 149 B1**
(45) Veröffentlichungstag und Bekanntmachung des Hinweises auf die Patenterteilung: **04.07.2012**
(21) Anmeldenummer: 09011100.6
(22) Anmeldetag: 29.08.2009
(51) Int. Cl.: A01F 29/10

(54) **Einzugsvorrichtung für ein Häckselaggregat eines Feldhäckslers**
Intake device for a shredder device of a chaff cutter
Dispositif d'introduction pour un agrégat de hachage d'une récolteuse-hacheuse

(30) Priorität: 12.09.2008 DE 202008012224 U
(43) Veröffentlichungstag der Anmeldung: 17.03.2010
(73) Patentinhaber: CLAAS Saulgau GmbH, 88348 Bad Saulgau (DE)
(72) Erfinder: Oliva, Christoph, 88348 Bad Saulgau (DE)

(56) Entgegenhaltungen:
- EP-A1- 0 519 209
- EP-A1- 0 797 914
- EP-A1- 1 872 649
- DE-A1- 10 327 309

## Beschreibung

Die Erfindung betrifft eine Einzugsvorrichtung für ein Häckselaggregat eines Feldhäckslers gemäß dem Oberbegriff des unabhängigen Anspruchs 1.

### Stand der Technik

Einzugsvorrichtungen für Häckselaggregate wie in der EP 0 519 209 A1 bestehen aus angetriebenen Einzugs- und Presswalzen, die paarweise übereinander und in Reihen nebeneinander liegen, so dass die oberen und unteren Presswalzen Einzugs- bzw Pressspalten bilden. Damit sich die Spaltweiten der Einzugs- bzw Pressspalte auf den momentanen Erntegutstrom einstellen können, sind die Oberwalzen beweglich gelagert, so dass sich die Spaltweiten selbsttätig auf die momentane Situation einstellen können. Damit der Erntegutstrom zu einem Strang verpresst und damit verdichtet wird, sind die Oberwalzen einer Auflast im Sinne einer Vorspannkraft ausgesetzt. Diese Vorspannkraft wird vorzugsweise durch Zugfedern aufgebracht, wobei die Vorspannkraft sich automatisch mit zunehmender Spaltweite zwischen Ober- und Unterwalzen vergrößert, welches durchaus erwünscht ist, da sich mit zunehmender Schichtdicke des Erntegutstroms auch größere Vorpresskräfte einstellen müssen. Bedingt durch die der Einzugsvorrichtung inne wohnenden dynamischen Kräfte, resultierend aus dem Antrieb der Einzugs- und Presswalzen, dem Erntegutstrom hervorrufenden Reaktionskräften, der Federvorspannkraft und den Massenträgheitskräften, werden insbesondere die Oberwalzen zu Schwingungen angeregt, deren Amplituden nicht außer Kontrolle geraten dürfen, da dieses zu Störungen im Erntegutfluss und damit zu Verstopfungen führen würde. Um dieses zu vermeiden, ist dieses schwingende System mit Dämpfungselementen ausgestattet, die üblicherweise als ölhydraulische Stoßdämpfer nach dem Prinzip Zylindergehäuse mit Dämpfungskolben und Kolbenstange ausgebildet sind. Der Dämpfungskolben, bzw. die daran gekoppelte Kolbenstange nehmen dabei an den Auf- und Abwärtsbewegungen der Oberwalzen teil und müssen dabei entsprechend große Wege zurück legen. Das skalare Produkt aus Kraft x Weg ergibt dabei physikalische Arbeit, die in Wärme umgewandelt wird und die es an die Umwelt abzuführen gilt. Die große, dem System innewohnende Dynamik ist ursächlich für den hohen Verschleiß der Dämpfungselemente, die damit in regelmäßig wiederkehrenden zeitlichen Abständen ausgetauscht werden müssen.

### Aufgabenstellung

Hier setzt die Aufgabe der Erfindung an, mit dem Ziel, das dynamische Verhalten der Einzugs- und Vorpresswalzen einer Einzugsvorrichtung für Häckselaggregate eines Feldhäckslers im laufenden Erntebetrieb zu verbessern.

### Lösung der Aufgabe

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Die erfindungsgemäße Einzugsvorrichtung für einen Feldhäcksler, besteht aus einem Grundrahmen der als Schwinge schwenkbar um eine Drehgelenk ausgebildet ist und der wenigstens eine vordere Press- und Einzugswalze aufnimmt, wobei der Grundrahmen von einer ersten Lenkerkoppel und einer zweiten Lenkerkoppel aufgenommen und geführt wird und wobei wenigstens eine der beiden Lenkerkoppeln längenveränderbar ausgebildet ist, wobei die Lage und Ausrichtung der längenveränderbaren Lenkerkoppel so bestimmt ist, dass die zweite Lenkerkoppel näherungsweise parallel zur ersten Lenkerkoppel verläuft, und sich die Oberwalzen dadurch im Wesentlichen translatorisch und überwiegend vertikal zur Bewegungsrichtung des Ernteguts derart bewegen können, dass etwa keine Längenveränderung an der längenveränderbaren Lenkerkoppel hervorgerufen wird.

Dabei wird der Grundrahmen von einem ersten Drehgelenk und einem zweiten Drehgelenk als Anschlagpunkte des Grundrahmens aufgenommen, wobei der Abstand der beiden Drehgelenke einen Hebelarm bilden. Des weiteren stützen sich die Lenkerkoppeln in Anschlagpunkten, ebenfalls ausgebildet als Drehgelenke, direkt oder indirekt am Einzugsgehäuse ab. Erfindungsgemäß bilden die Lenkerkoppeln und der Grundrahmen ein Koppelgetriebe und insbesondere ein Viergelenkgetriebe, denen zum einen ein Kraftspeicherelement und zum anderen eine Dämpfungselement zugeordnet ist. In besonders vorteilhafter Weise ist eine der beiden Lenkerkoppeln selbsttätig längenveränderbar ausgebildet und in einer weiteren vorteilhaften Ausgestaltung gleichzeitig als Dämpfungsglied ausgestaltet, wie dieses beispielsweise bei einem ölhydraulischen Stoßdämpfer der Fall ist.

Diese erfinderische Ausgestaltung beinhaltet den Vorteil, dass die langhubigen überwiegend translatorischen Bewegungen der oberen Press- und Einzugswalzen dass Dämpfungselement wenig belasten, wohin gegen die Schwenk- bzw. Nickbewegungen der vorderen oberen Press- und Einzugswalzen gut bedämpft werden, welches erwünscht ist, da gerade diese Nickbewegungen dazu neigen, den Schwingungsvorgang außer Kontrolle geraten zu lassen, welches die langhubigen Dämpfungselemente- wie die allgemein üblichen ölhydraulischen Stoßdämpfer sehr stark belastet.

In einer weiteren erfinderischen Ausgestaltung ist es besonders vorteilhaft, die Drehachsen der nachgelagerten oberen Press- und Einzugswalze und die des Schwenklagers des Grundrahmens zusammen fallen zu lassen, so dass das erste Drehgelenk des als Schwinge ausgebildeten Grundrahmens identisch ist mit dem Lager der einer hinteren oberen Press- und Einzugswalze. Dieses Drehgelenk kann beispielsweise auch in Verbindung mit einer Scheibenbremse ausgestaltet sein, welches dann die Funktion des Dämpfungselements übernimmt.

Das nachfolgende Ausführungsbeispiel steht exemplarisch für die nähere Erläuterung der Erfindung und stellvertretend für weitere denkbare Varianten, die hier nicht explizit aufgeführt sind, die aber die Lehre der Erfindung in Anspruch nehmen.

### Ausführungsbeispiel

Es zeigen:
- Fig.1: Einzugsvorrichtung 1 eines Feldhäckslers in einer Prinzipdarstellung in der Grundstellung
- Fig.1a: Ausschnitt aus Fig.1 in vergrößerter Darstellung
- Fig.2: Einzugsvorrichtung 1 eines Feldhäckslers analog Fig.1 in einer Arbeitsstellung im laufenden Erntebetrieb
- Fig.2a: Ausschnitt aus Fig.2 in vergrößerter Darstellung
- Fig.3: Einzugsvorrichtung 1 eines Feldhäckslers analog Fig.2 in einer weiteren Arbeitsstellung im laufenden Erntebetrieb
- Fig.3a: Ausschnitt aus Fig.3 in vergrößerter Darstellung
- Fig.4: Einzugsvorrichtung 1 eines Feldhäckslers analog Fig.3 in einer weiteren Arbeitsstellung im laufenden Erntebetrieb
- Fig.4a: Ausschnitt aus Fig.4 in vergrößerter Darstellung

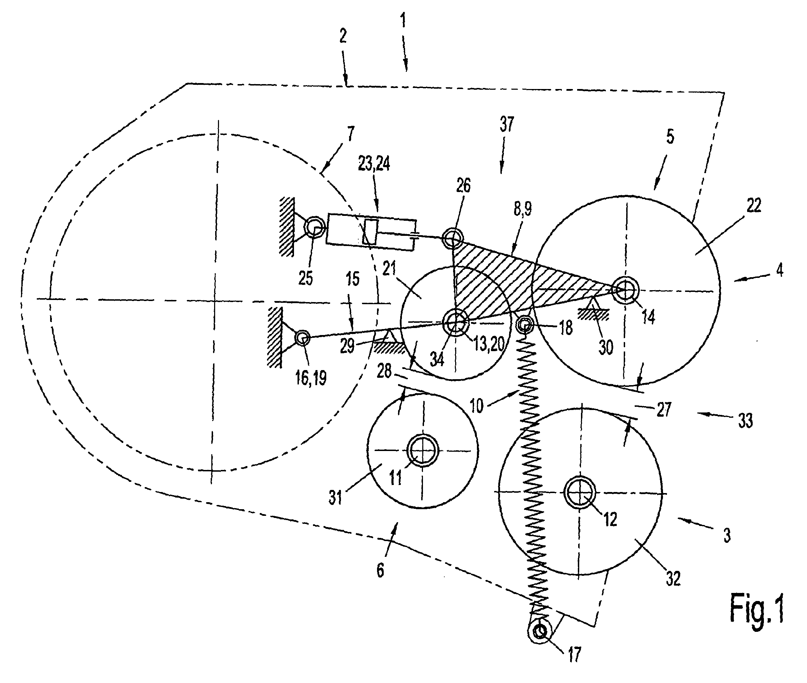

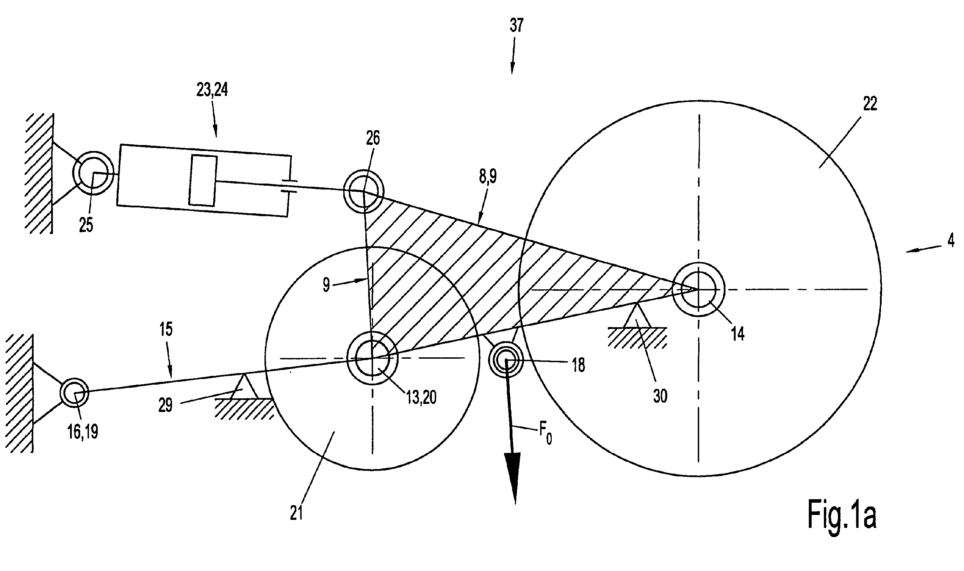

In Fig.1 ist eine Einzugsvorrichtung 1 eines Feldhäckslers in einer Prinzipdarstellung und in der Grundstellung 37 vereinfacht dargestellt. Sie besteht im Wesentlichen aus dem Einzugsgehäuse 2, den angetriebenen Unterwalzen 3 und Oberwalzen 4, die zugleich ein vorderes Walzenpaar 5 und ein hinters Walzenpaar 6 bilden, denen die Häckseltrommel 7 nachgelagert ist. Die Unterwalzen 3, bestehend aus wenigstens zwei nebeneinander liegenden Presswalzen 31,32, sind in Lagern 11,12, und die Oberwalzen 4, bestehend aus wenigstens zwei nebeneinander liegenden Presswalzen 21,22, sind in Lagern 13,14 drehbar und umlaufend angetrieben, abgestützt. Die Lager 11,12 der unteren Presswalzen 31,32 sind ortsfest mit dem Einzugsgehäuse 2 verbunden, wohin gegen die oberen Presswalzen 21,22 auf einem relativ zu den Unterwalzen 3 beweglichen Grundrahmen 8, der zugleich als Schwinge schwenkbeweglich um den Drehpunkt des Lagers 13 ausgebildet ist, die Lager 13,14 der Presswalzen 21,22 aufnimmt.

Die Oberwalzen 4 sind durch ein Kraftspeicherelement 10, beispielsweise durch eine Zugfeder 10, gegenüber den Unterwalzen 3 vorgespannt. Die Zugfeder 10 ist einerseits am Häckselgehäuse 2 in dem Anschlagpunkt 17 und andererseits in dem Anschlagpunkt 18 an dem Grundrahmen 8 angeschlagen. Da es sich bei den Darstellungen Fig.1 bis Fig.4 um vereinfachte Prinzipdarstellungen handelt, ist es dem Fachmann durchaus klar, dass die Presswalzen 3,4 eine Längserstreckung aufweisen und dass beidseitig der Stirnflächen der Unter- und Oberwalzen 3,4 Zugfedern 10 angeordnet sind.

Dabei wird der Grundrahmen 8 von Lenkerkoppeln 15, die schwenkbeweglich von Festlagern 16 am Häckselgehäuse 2 abgestützt sind, aufgenommen. Der Drehpunkt des Festlagers 16 stellt damit zugleich den Anschlagpunkt 19 der Lenkerkoppeln 15 dar, die beidseitig der Oberwalzen 4 den Grundrahmen 8 in Lagern 13 schwenkbeweglich in den Anschlagpunkten 20 aufnehmen. Der Grundrahmen 8 wird somit von den Lenkerkoppeln 15 ebenfalls schwenkbeweglich um die Anschlagpunkte 20, welche zugleich die Lagerstellen 13 der hinteren oberen Presswalze 21 des hinteren Walzenpaares 8 darstellen, aufgenommen.

Als weiteres Koppelelement zur Abstützung des Grundrahmens 8 dient eine längenveränderbare Lenkerkoppel 23, die zugleich als Dämpfungselement 24 ausgebildet ist. Dieses Dämpfungselement 24 ist in dem Ausführungsbeispiel als hydraulischer Stoßdämpfer ausgebildet, dessen Kolbenstange freiverschieblich in dem Zylindergehäuse geführt wird. Auch dieses Dämpfungselement 24 ist beidseitig der Oberwalzen 4 angeordnet. Die Lenkerkoppel 23 ist in Anschlagpunkten 25,26 aufgenommen, wobei sich der Anschlagpunkt 25 am Einzugsgehäuse 2 und der Anschlagpunkt 26 am Grundrahmen 8 abstützt. Der Grundrahmen 8 beinhaltet zugleich einen Hebel 9, der drehfest mit dem Grundrahmen 8 eine Einheit bildet und der die Lagerstellen bzw. Drehgelenke 13 und 26 zueinander beabstandet. Die Ausführung als ölhydraulisches Dämpfungselement ist lediglich als beispielhaft anzusehen, da auch andere reibungsbasierende Dämpfungselemente zum Einsatz kommen können.

Das vordere Walzenpaar 5 ist definiert durch die relativ zum Einzugsgehäuse 2 ortsfest gelagerte untere Presswalze 32 und die die relativ zum Einzugsgehäuse 2 beweglich gelagerte obere Presswalze 22. Das vordere Walzenpaar 5 definiert dabei zugleich durch die Beabstandung der vorderen oberen Presswalze 22 und der vorderen unteren Presswalze 32 den Einzugsspalt 33 der Einzugsvorrichtung 1, so dass die Presswalzen 22,32 zugleich Press- und Einzugswalzen darstellen. Das hintere Walzenpaar 6 ist definiert durch die relativ zum Einzugsgehäuse 2 ortsfest gelagerte untere Presswalze 31 und die die relativ zum Einzugsgehäuse 2 beweglich gelagerte obere Presswalze 21, wobei diese direkt vor der Häckseltrommel 7 angeordnet sind und das Futterkissen des Ernteguts 35 auf ein Minimum zusammenpressen.

Fig.1 zeigt die Einzugsvorrichtung 1 in ihrer Grundstellung, d.h. die Spaltmaße, das erste Spaltmaß 27 und das zweite Spaltmaß 28, nehmen ihre geringsten Werte bzw. Durchgangsmaße an. Es handelt sich bei dieser Stellung der Presswalzen 21,22,31,32 zueinander um die Grundstellung in der Parkposition.

Dieses deshalb, weil, bedingt durch die vorgespannte Federkraft F₀, der Grundrahmen 8, ausgebildet als Schwinge 9 und schwenkbar um den Drehpunkt 34 des Lagers 13 im Uhrzeigersinn dreht und dabei am Anschlag 30 anliegt, wobei zugleich auch die Lenkerkoppel 15 an ihrem unteren Anschlag 29, welcher sich ebenfalls am Einzugsgehäuse 2 abstützt, anliegt.

Fig. 1a zeigt die Oberwalzen 4 mit ihrer vorderen Presswalze 22 und ihrer hinteren Presswalze 21 in der zuvor genannten Grundstellung gemäß Fig.1 in einer vergrößerten Darstellung gegenüber der Fig.1.

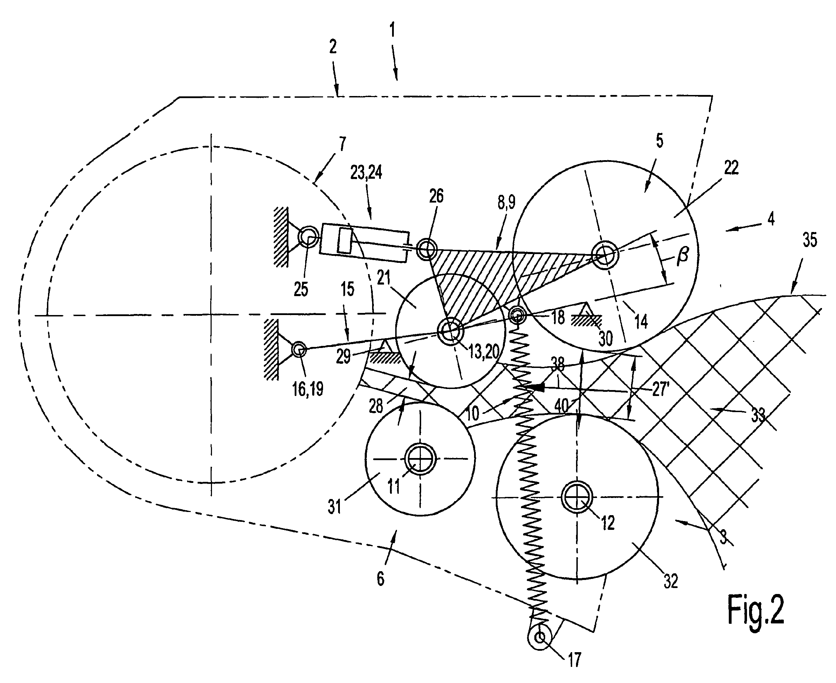

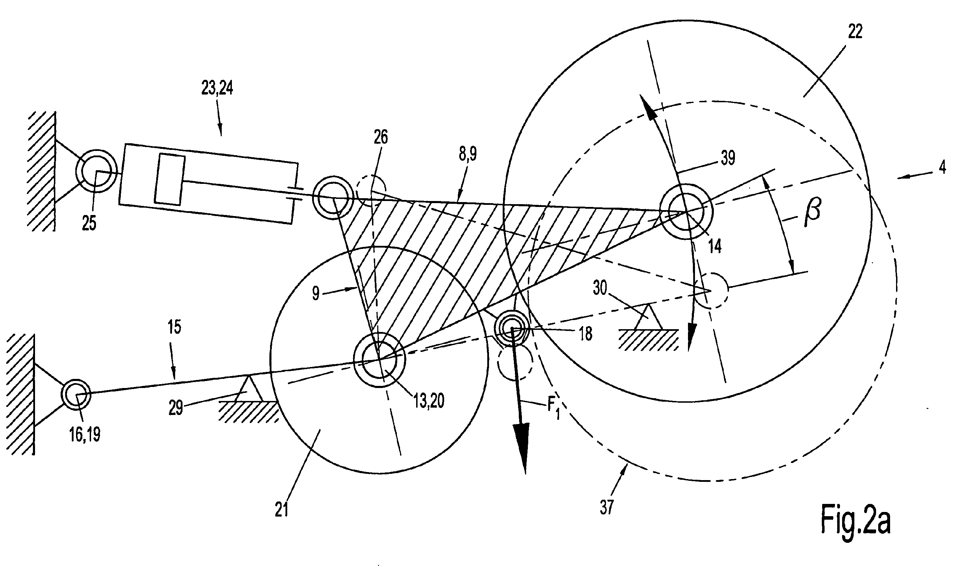

Fig.2 zeigt die Einzugsvorrichtung 1 analog Fig.1 in einer momentanen Arbeitsstellung des laufenden Erntebetriebs und Fig.2a zeigt einen Ausschnitt aus Fig.2 in vergrößerter Darstellung. Durch das eingezogene Erntgut 35, welches einen Gutstrom bildet, wird die Press- und Einzugswalze 22 gegen die Federvorspannkraft F₀ nach oben gedrückt, so dass der Einzugsspalt 27' sich relativ zur Parkposition vergrößert. Dieses geht einher mit einer Verlängerung der Zugfeder 10, so dass sich an dieser die größere Federkraft F₁ einstellt. Es ist in dieser Situation unterstellt, dass die Vorpresskraft F₁ hinreichend ist, derart, dass die Spaltweite 28 gegenüber der Grundstellung in der Parkposition gemäß Fig.1 unverändert ist, so dass lediglich die vordere und obere Press- u. Einzugswalze 22 nach oben ausweicht, welches mit einer Schwenkbewegung des Grundrahmens 8 um den Drehpunkt 20 mit dem Schwenkwinkel β (β > 0°) einhergeht.

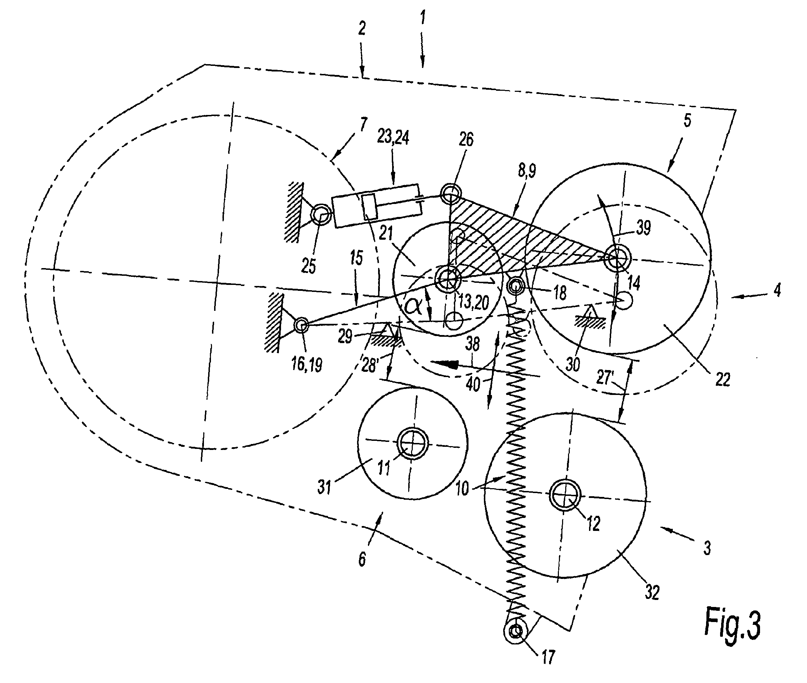

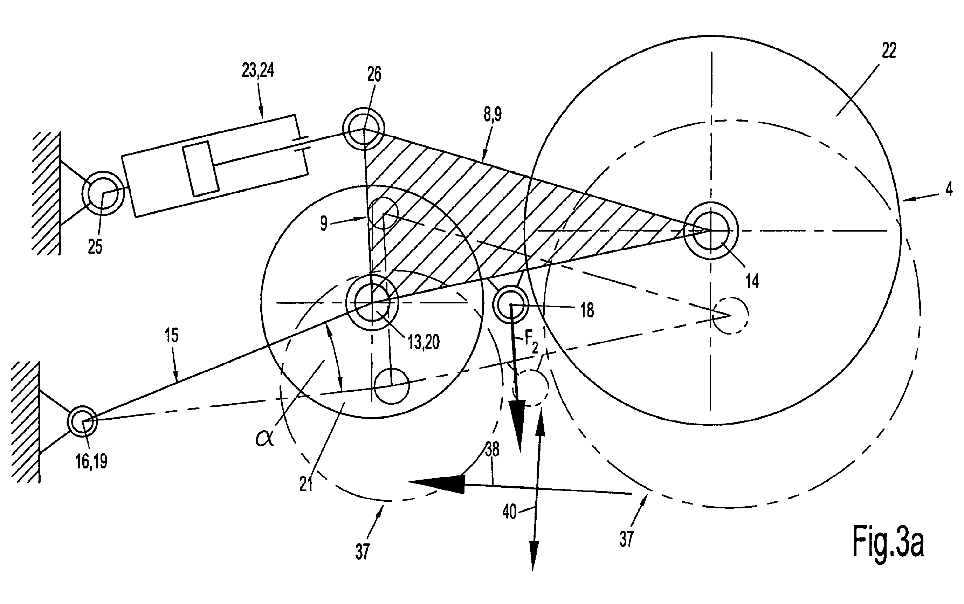

Fig.3 zeigt die Einzugsvorrichtung 1 analog Fig.2 in einer weiteren momentanen Arbeitsstellung des laufenden Erntebetriebs und Fig.3a zeigt einen Ausschnitt aus Fig.3 in vergrößerter Darstellung. Dabei ist dargestellt, dass durch das eingezogene Erntgut 35, welches einen Gutstrom bildet, die Oberwalzen 4, und damit die Press- und Einzugswalze 22 und auch die hintere obere Presswalze 21 ihre momentane Lage gegenüber der Parkposition gemäß Fig.1 verändert haben und gegen die Federvorspannkraft F₃ nach oben gedrückt sind, so dass sich die Spaltabstande 27' und 28' relativ zur Parkposition vergrößert haben. Dieses geht einher mit einer Verlängerung der Zugfeder 10, so dass sich an dieser die größere Federkraft F₂ einstellt. Es ist in dieser dargestellten Situation unterstellt, dass sich lediglich die Lenkerkoppel 15 um den Dreh- bzw. Anschlagpunkt 19 um den Winkel α (α > 0°) verschwenkt hat, so dass sich die Spaltweite 28' gegenüber der Grundstellung gemäß Fig.1 verändert hat, wobei ebenfalls unterstellt ist, dass der Grundrahmen 8 keine Verschwenkung um den Anschlagpunkt 20 relativ zur Lenkerkoppel 15 erfahren hat und sich somit kein Verschwenkwinkel β (β = 0°) eingestellt hat. Da der Grundrahmen 8 an dem Schwenkvorgang um den Anschlagpunkt 19 mit dem Schwenkwinkel α teilgenommen hat, nehmen nunmehr beide Presswalzen 21,22 an diesem Schwenkvorgang teil, so dass sich gleichzeitig beide Spaltabstande 27',28' verändern und damit neu eingestellt haben.

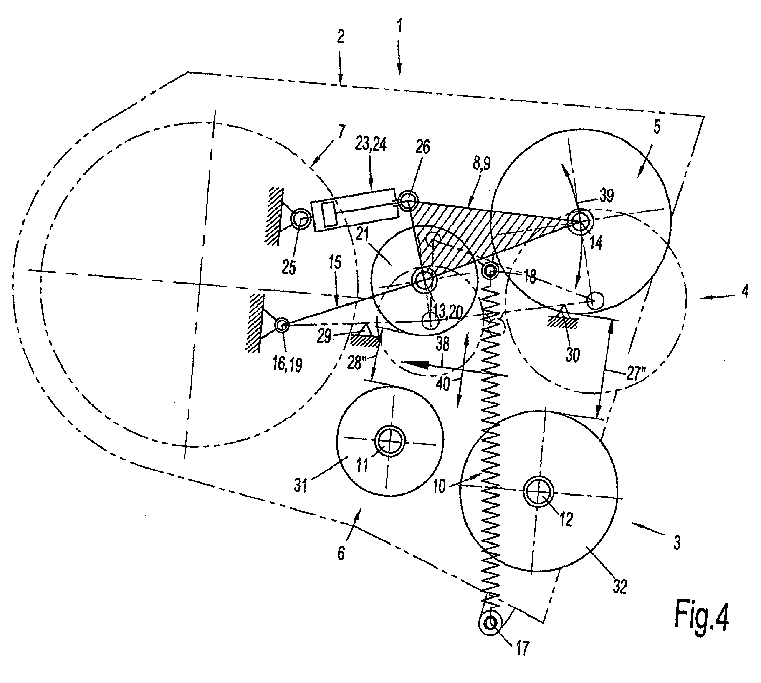

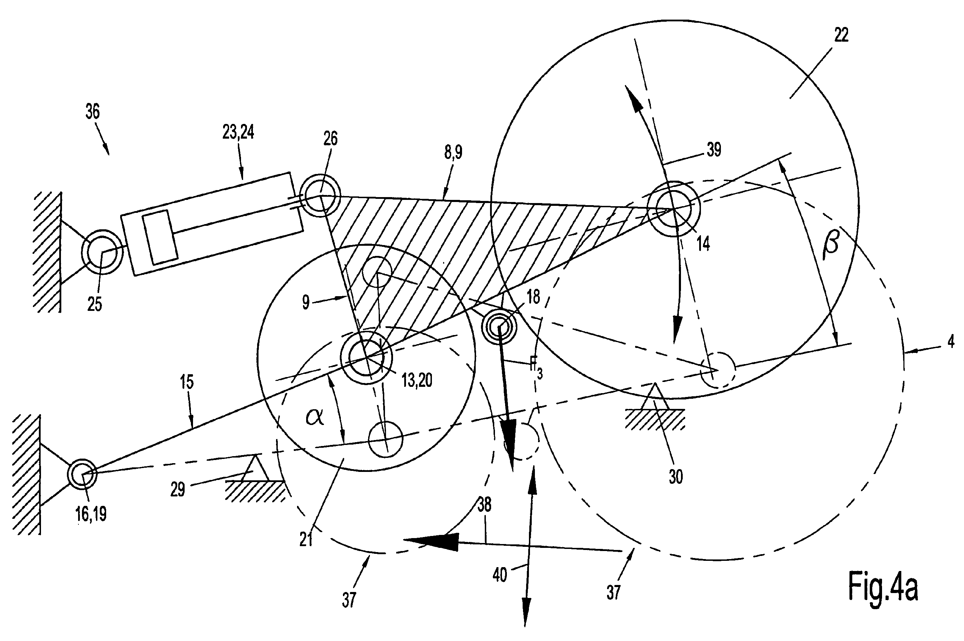

Fig.4 zeigt die Einzugsvorrichtung 1 analog Fig.3 in einer weiteren momentanen Arbeitsstellung des laufenden Erntebetriebs und Fig.4a zeigt einen Ausschnitt aus Fig.4 in vergrößerter Darstellung. Dabei ist dargestellt, dass nicht nur die Lenkerkoppel 15 um einen Schwenkwinkel α sondern auch der Grundrahmen 8 als Schwinge 8 um einen Schwenkwinkel β sich relativ zur Grundstellung 37 gemäß Fig.1 bewegt bzw. verändert hat. Dieses ist eine momentane Reaktion auf den sich eingestellten und eingezogenen Erntgutstrom 35. Dieses geht ebenfalls einher mit einer Verlängerung der Zugfeder 10, so dass sich an dieser die größere Federkraft F₃ einstellt. Da der Grundrahmen 8 an dem Schwenkvorgang um den Anschlagpunkt 19 mit dem Schwenkwinkel α teilgenommen hat nehmen nunmehr beide Presswalzen 21,22 an diesem Schwenkvorgang teil, so dass sich gleichzeitig beide Spaltabstande 27",28" verändern und damit neu eingestellt haben.

Die zuvor angesprochenen Situationen im laufenden Erntebetrieb sind hochdynamische Bewegungsvorgänge, an denen erhebliche Beschleunigungskräfte beteiligt sind. Um zu verhindern, dass die Oberwalzen 4 sich zu unkontrollierten Schwingungen mit großen Amplituden aufschaukeln, ist den Oberwalzen 4 ein Dämpfungselement 24 zugeordnet, welches erfindungsgemäß zugleich als längenveränderbare Lenkerkoppel 23 ausgebildet ist. Durch diese Ausgestaltung hinsichtlich der Anordnung der Lenkerkoppeln 15,23 und der Schwinge 8, welche die Oberwalzen 4 aufnehmen, entsteht ein Koppelgetriebe 36 als Viergelenkgetriebe mit den Drehgelenken 13,16,24,26. Die Lage und Ausrichtung der Lenkerkoppel 23 etwa näherungsweise parallel zur Lenkerkoppel 15 ermöglicht es, dass die Oberwalzen 4 sich im Wesentlichen translatorisch und überwiegend vertikal zur Bewegungsrichtung 38 des Ernteguts 35 bewegen können und dass dabei die Einzugs- und Presswalze 22 unabhängig von dieser translatorischen Bewegungsform Schwenkbewegungen 39 um den Anschlag- bzw. Drehpunkt 20 ausführen kann. Dabei können sich je nach der momentanen Situation durch den Erntegutstrom auch beide Bewegungsformen überlagern. Von besonderem Vorteil ist es dabei, dass die Bewegungen innerhalb des Dämpfungselementes 24 durch kürzen oder verlängern der Lenkerkoppel 23 in Bezug auf die translatorischen Bewegungen relativ gering ausfallen, wohin gegen die Schwenkbewegungen 39 der Schwinge 8 größere Bewegungen innerhalb des Dämpfungselementes 24 durch kürzen oder verlängern der Lenkerkoppel 23 verursachen. Gerade darin liegt der erfinderische Vorteil, nämlich, dass dadurch das Dämpfungselement 24 sich überwiegend auf die Bedämpfung der Bewegungsformen der vorderen oberen Einzugs- und Presswalze beschränkt, so dass dadurch eine unnötige Wärmeentwicklung und damit unnötiger Verschleiß an dem Dämpfungselement vermieden wird.

### Bezugszeichenliste

- 1: Einzugsvorrichtung
- 2: Einzugsgehäuse
- 3: Unterwalzen
- 4: Oberwalzen
- 5: vorderes Walzenpaar
- 6: hinteres Walzenpaar
- 7: Häckseltrommel
- 8: Grundrahmen
- 9: Schwinge
- 10: Zugfeder, Kraftspeicherelement
- 11: Lager
- 12: Lager
- 13: Lager, Drehgelenk
- 14: Lager
- 15: Lenkerkoppel
- 16: Festlager
- 17: Anschlagpunkt, Drehgelenk
- 18: Anschlagpunkt, Drehgelenk
- 19: Anschlagpunkt, Drehgelenk
- 20: Anschlagpunkt, Drehgelenk
- 21: hintere obere Press- u. Einzugswalze
- 22: vordere obere Press- u. Einzugswalze
- 23: Lenkerkoppel
- 24: Dämpfungselement
- 25: Anschlagpunkt, Drehgelenk
- 26: Anschlagpunkt, Drehgelenk
- 27,27',27": erstes Spaltmaß, (Einzugsspalt)
- 28,28',28": zweite Spaltmaß
- 29: erster Anschlag
- 30: zweiter Anschlag
- 31: hintere untere Presswalze
- 32: vordere untere Presswalze
- 33: Einzugsspalt
- 34: Drehpunkt
- 35: Erntegut, Erntgutstrom
- 36: Koppelgetriebe
- 37: Grundstellung
- 38: Bewegungsrichtung des Erntegutstroms
- 39: Schwenkbewegung
- 40: translatorische Bewegung

- F₀: Federkraft, Vorspannkraft
- F₁: Federkraft
- F₂: Federkraft
- F₃: Federkraft
- α: Schwenkwinkel
- β: Schwenkwinkel

## Patentansprüche

1. Einzugsvorrichtung (1) für Feldhäcksler, bestehend aus einem Einzugsgehäuse (2) mit wenigstens einem vorderen und einem hinteren Press- und Einzugswalzenpaar, welche eine obere und eine untere Presswalze aufweisen, die einen Einzugs- bzw. Pressspalt definieren, wobei die oberen und unteren Presswalzen je eine Reihe bildend übereinander liegen und jede Reihe aus wenigstens zwei Presswalzen besteht, wobei wenigstens zwei eine Reihe bildende Presswalzen von einem beweglichen Grundrahmen aufgenommen werden, so dass die Presswalzen Relativbewegungen zueinander ausführen können, wobei den Presswalzen durch wenigstens einen Kraftspeicher eine Vorspannkraft aufgezwungen wird und dem wenigstens einen Kraftspeicher wenigstens ein Dämpfungselement zugeordnet ist, wobei der Grundrahmen (8) als Schwinge (9) schwenkbar um ein Drehgelenk (20) ausgebildet ist und wenigstens eine vordere Press- und Einzugswalze (22) aufnimmt, wobei der Grundrahmen (8) von einer ersten Lenkerkoppel (15) und einer zweiten Lenkerkoppel (23) aufgenommen und geführt wird und wobei wenigstens eine der beiden Lenkerkoppeln (15,23) längenveränderbar ausgebildet ist, **dadurch gekennzeichnet, dass** die Lage und Ausrichtung der längenveränderbaren Lenkerkoppel (23) so bestimmt ist, dass die zweite Lenkerkoppel (23) näherungsweise parallel zur ersten Lenkerkoppel (15) verläuft, und sich die Oberwalzen (4) **dadurch** im Wesentlichen translatorisch und überwiegend vertikal zur Bewegungsrichtung (38) des Ernteguts (35) derart bewegen können, dass etwa keine Längenveränderung an der längenveränderbaren Lenkerkoppel (23) hervorgerufen wird.

2. Einzugsvorrichtung (1) nach Anspruch 1, **dadurch gekennzeichnet, dass** der Grundrahmen (8) von einem ersten Drehgelenk (20) und einem zweiten Drehgelenk (26) als Anschlagpunkte des Grundrahmens (8) aufgenommen wird.

3. Einzugsvorrichtung (1) nach Anspruch 1 und 2, **dadurch gekennzeichnet, dass** der Grundrahmen (8) einen die Drehgelenke (20,26) beabstandenden Hebelarm (9) umfasst.

4. Einzugsvorrichtung (1) nach Anspruch 1, **dadurch gekennzeichnet, dass** die Lenkerkoppeln (15,23) in Anschlagpunkten (19,25), ausgebildet als Drehgelenke, aufgenommen werden, welche sich direkt oder indirekt am Einzugsgehäuse (2) abstützen.

5. Einzugsvorrichtung (1) nach Anspruch 1 und 2, **dadurch gekennzeichnet, dass** das erste Drehgelenk (20) identisch ist mit dem Lager (13) einer hinteren oberen Press- und Einzugswalze (21).

6. Einzugsvorrichtung (1) nach Anspruch 1 bis 4, **dadurch gekennzeichnet, dass** die Lenkerkoppeln (15,23) und der Grundrahmen (8) ein Koppelgetriebe (36) beinhalten.

7. Einzugsvorrichtung (1) nach Anspruch 6, **dadurch gekennzeichnet, dass** das Koppelgetriebe (36) ein Viergelenkgetriebe ist.

8. Einzugsvorrichtung (1) nach Anspruch 1 bis 4, **dadurch gekennzeichnet, dass** der Grundrahmen (8) von einer Vorspannkraft (F₀), ausgehend von einem Kraftspeicherelement (10), beaufschlagt wird.

9. Einzugsvorrichtung (1) nach Anspruch 8, **dadurch gekennzeichnet, dass** das Kraftspeicherelement (10) wenigstens eine Zugfeder umfasst.

10. Einzugsvorrichtung (1) nach Anspruch 6, **dadurch gekennzeichnet, dass** das Koppelgetriebe (23) ein Dämpfungselement (24) umfasst.

11. Einzugsvorrichtung (1) nach Anspruch 10, **dadurch gekennzeichnet, dass** wenigstens eine Lenkerkoppel (23) ein Dämpfungselement umfasst.

12. Einzugsvorrichtung (1) nach Anspruch 11, **dadurch gekennzeichnet, dass** die Lenkerkoppel (23) und das Dämpfungselement baulich eine Einheit darstellen.

13. Einzugsvorrichtung (1) nach einem der Ansprüche 10 bis 12, **dadurch gekennzeichnet, dass** das Dämpfungselement (24) ein ölhydraulischer Stoßdämpfer ist.

14. Einzugsvorrichtung (1) nach einem der Ansprüche 10 bis 12, **dadurch gekennzeichnet, dass** das Dämpfungselement (24) als Reibelement ausgebildet ist.

15. Einzugsvorrichtung (1) nach Anspruch 14, **dadurch gekennzeichnet, dass** das Dämpfungselement (24) als Scheibenbremse ausgebildet ist.

## Claims

1. An intake apparatus (1) for forage harvesters, comprising an intake housing (2) having at least a front and a rear pair of pressing and intake rollers which have an upper and a lower pressing roller which define an intake or pressing gap respectively, wherein the upper and lower pressing rollers are disposed one above the other forming a respective row and each row comprises at least two pressing rollers, wherein at least two pressing rollers forming a row are carried by a movable main frame so that the pressing rollers can perform relative movements with respect to each other, wherein a biasing force is imposed on the pressing rollers by at least one force storage means and at least one damping element is associated with the at least one force storage means, wherein the main frame (8) is in the form of a swing arm (9) pivotably about a rotary joint (20) and carries at least one front pressing and intake roller (22), wherein the main frame (8) is mounted and guided by a first guide coupling member (15) and a second guide coupling member (23) and wherein at least one of the two guide coupling members (15, 23) is variable in length, **characterised in that** the position and orientation of the variable-length guide coupling member (23) is so determined that the second guide coupling member (23) extends approximately parallel to the first guide coupling member (15) and the upper rollers (4) can thereby move substantially with a translatory movement and predominantly vertically relative to the direction of movement (38) of the crop material (35) in such a way that approximately no variation in length is caused at the variable-length guide coupling member (23).

2. An intake apparatus (1) according to claim 1 **characterised in that** the main frame (8) is mounted by a first rotary joint (20) and a second rotary joint (26) as fitment points of the main frame (8).

3. An intake apparatus (1) according to claim 1 and claim 2 **characterised in that** the main frame (8) includes a lever arm (9) spacing the rotary joints (20, 26).

4. An intake apparatus (1) according to claim 1 **characterised in that** the guide coupling members (15, 23) are mounted at fitment points (19, 25) in the form of rotary joints which are supported directly or indirectly at the intake housing (2).

5. An intake apparatus (1) according to claim 1 and claim 2 **characterised in that** the first rotary joint (20) is identical to the mounting (13) of a rear upper pressing and intake roller (21).

6. An intake apparatus (1) according to claims 1 to 4 **characterised in that** the guide coupling members (15, 23) and the main frame (8) include a coupling transmission (36).

7. An intake apparatus (1) according to claim 6 **characterised in that** the coupling transmission (36) is a four-bar linkage transmission.

8. An intake apparatus (1) according to claims 1 to 4 **characterised in that** the main frame (8) is acted upon by a biasing force (F₀) from a force storage element (10).

9. An intake apparatus (1) according to claim 8 **characterised in that** the force storage element (10) includes at least one tension spring.

10. An intake apparatus (1) according to claim 6 **characterised in that** the coupling transmission (23) includes a damping element (24).

11. An intake apparatus (1) according to claim 10 **characterised in that** at least one guide coupling member (23) includes a damping element.

12. An intake apparatus (1) according to claim 11 **characterised in that** the guide coupling members (23) and the damping element structurally represent a unit.

13. An intake apparatus (1) according to one of claims 10 to 12 **characterised in that** the damping element (24) is an oil-hydraulic shock absorber.

14. An intake apparatus (1) according to one of claims 10 to 12 **characterised in that** the damping element (24) is in the form of a friction element.

15. An intake apparatus (1) according to claim 14 **characterised in that** the damping element (24) is in the form of a disc brake.

## Revendications

1. Dispositif d'alimentation (1) pour ensileuse, composé d'un carter d'alimentation (2) contenant au moins une paire avant et une paire arrière de rouleaux de compression et d'alimentation, qui comportent un rouleau de compression supérieur et un rouleau de compression inférieur, lesquels définissent une fente d'alimentation, respectivement de compression, les rouleaux de compression supérieurs et inférieurs étant superposés et formant à chaque fois une rangée, chaque rangée étant composée d'au moins deux rouleaux de compression, au moins deux rouleaux de compression formant une rangée étant reçus par un cadre de base mobile, de sorte que les rouleaux de compression peuvent effectuer des mouvements relatifs l'un par rapport à l'autre, une force de précontrainte étant appliquée aux rouleaux de compression par au moins un accumulateur de force, et au moins un élément amortisseur étant associé audit au moins un accumulateur de force, le cadre de base (8) étant conçu comme un balancier (9) pouvant pivoter autour d'une articulation tournante (20) et recevant au moins un rouleau de compression et d'alimentation (22), le cadre de base (8) étant reçu et guidé par un premier bras oscillant (15) et par un deuxième bras oscillant (23), et au moins un des deux bras oscillants (15, 23) étant conçu variable en longueur, **caractérisé en ce que** la position et l'orientation du bras oscillant variable en longueur (23) sont déterminées de façon que le deuxième bras oscillant (23) s'étende à peu près parallèlement au premier bras oscillant (15) et que les rouleaux supérieurs (4) puissent de ce fait se déplacer essentiellement en translation et principalement verticalement par rapport à la direction de déplacement (38) du produit de récolte (35), de manière à ne provoquer à peu près aucune variation de longueur sur le bras oscillant variable en longueur (23).

2. Dispositif d'alimentation (1) selon la revendication 1, **caractérisé en ce que** le cadre de base (8) est reçu par une première articulation tournante (20) et par une deuxième articulation tournante (26) servant de points d'attache du cadre de base (8).

3. Dispositif d'alimentation (1) selon les revendications 1 et 2, **caractérisé en ce que** le cadre de base (8) comprend un bras de levier (9) écartant les articulations tournantes (20, 26).

4. Dispositif d'alimentation (1) selon la revendication 1, **caractérisé en ce que** les bras oscillants (15, 23) sont reçus au niveau de points d'attache (19, 25) qui sont conçus comme des articulations tournantes et qui prennent appui directement ou indirectement sur le carter d'alimentation (2).

5. Dispositif d'alimentation (1) selon les revendications 1 et 2, **caractérisé en ce que** la première articulation tournante (20) est identique au palier (13) d'un rouleau de compression et d'alimentation arrière supérieur (21).

6. Dispositif d'alimentation (1) selon les revendications 1 à 4, **caractérisé en ce que** les bras oscillants (15,23) et le cadre de base (8) contiennent un mécanisme articulé (36).

7. Dispositif d'alimentation (1) selon la revendication 6, **caractérisé en ce que** le mécanisme articulé (36) est un quadrilatère articulé.

8. Dispositif d'alimentation (1) selon les revendications 1 à 4, **caractérisé en ce que** le cadre de base (8) est soumis à une force de précontrainte (F₀) émanant d'un élément accumulateur de force (10).

9. Dispositif d'alimentation (1) selon la revendication 8, **caractérisé en ce que** l'élément accumulateur de force (10) comprend au moins un ressort de traction.

10. Dispositif d'alimentation (1) selon la revendication 6, **caractérisé en ce que** le mécanisme articulé (23) comprend un élément amortisseur (24).

11. Dispositif d'alimentation (1) selon la revendication 10, **caractérisé en ce qu'**au moins un bras oscillant (23) comprend un élément amortisseur.

12. Dispositif d'alimentation (1) selon la revendication 11, **caractérisé en ce que** le bras oscillant (23) et l'élément amortisseur constituent une unité constructive.

13. Dispositif d'alimentation (1) selon une des revendications 10 à 12, **caractérisé en ce que** l'élément amortisseur (24) est un amortisseur oléo-hydraulique.

14. Dispositif d'alimentation (1) selon une des revendications 10 à 12, **caractérisé en ce que** l'élément amortisseur (24) est conçu comme un élément de friction.

15. Dispositif d'alimentation (1) selon la revendication 14, **caractérisé en ce que** l'élément amortisseur (24) est conçu comme un frein à disque.
